# EUROPÄISCHE PATENTSCHRIFT

(11) **EP 2 692 051 B1**
(45) Veröffentlichungstag und Bekanntmachung des Hinweises auf die Patenterteilung: **14.05.2014**
(21) Anmeldenummer: 12710884.3
(22) Anmeldetag: 01.03.2012
(51) Int. Cl.: H02N 2/06, H02N 2/00, H02N 2/02, H02N 2/10

(54) **VERFAHREN ZUR ANSTEUERUNG EINER MEHRAKTOR-ANTRIEBSVORRICHTUNG**
METHOD FOR ACTUATING A MULTI-ACTUATOR DRIVE DEVICE
PROCÉDÉ DE PILOTAGE D'UN DISPOSITIF D'ENTRAÎNEMENT À PLUSIEURS ACTIONNEURS

(30) Priorität: 30.03.2011 DE 102011015559; 01.03.2012 DE 102012101688
(43) Veröffentlichungstag der Anmeldung: 05.02.2014
(73) Patentinhaber: SmarAct Holding GmbH, 26135 Oldenburg (DE)
(72) Erfinder: KORTSCHACK, Axel, 26125 Oldenburg (DE); RAß, Christoph, 26131 Oldenburg (DE)
(74) Vertreter: Unland, Jochen Hermann
(86) Internationale Anmeldenummer: PCT/EP2012/053529
(87) Internationale Veröffentlichungsnummer: WO 2012/130555

(56) Entgegenhaltungen:
- WO-A1-2007/144251
- WO-A1-2010/088937
- WO-A1-2010/113505

## Beschreibung

Die Erfindung betrifft ein Verfahren zum Ansteuern einer linearen oder rotatorischen Mehraktor-Antriebsvorrichtung mit einem stationären und einem beweglichen Teil, wobei die Relativbewegung zwischen dem stationären und dem beweglichen Teil über Aktoren mit begrenzten Hüben erzeugt wird, die entweder direkt oder über eine kraftübertragende Mechanik im permanenten Reibkontakt mit dem beweglichen Teil stehen, gemäß Patentanspruch 1.

Grundsätzlich können unterschiedliche Typen von Aktoren mit begrenztem Hub eingesetzt werden. Besonders geeignet sind piezoelektrische und elektrostriktive Aktoren.
Mit derartigen Antriebsvorrichtungen lassen sich sowohl lineare als auch rotatorische Bewegungen erzeugen.

Aus dem Stand der Technik sind mehrere Antriebstechniken bekannt, die trotz der kurzen Hübe der Aktoren große Verstellwege ermöglichen. Diese lassen sich in verschiedene Varianten unterteilen.

Vorläufer der Mehraktorantriebe sind Trägheitsantriebe, hier konkret die Stick-Slip-Antriebe, bekannt aus D.W. Pohl: "Dynamic piezoelectric translation devices", in Review of Scientific Instruments, vol. 58 (1), Januar 1987, Seiten 54 bis 57. Es ist zunächst ein piezoelektrischer Aktor vorgesehen, der mit einem sägezahnähnlichen periodischen Signal beaufschlagt wird und eine Beschleunigung relativ zu einem reibschlüssig mit dem Aktor verbundenen beweglich gelagerten Läufer bewirkt. Bei einer niedrigen Beschleunigung des piezoelektrischen Aktors folgt der Läufer aufgrund des Reibschlusses dem Aktor. Bei einer hohen Beschleunigung des piezoelektrischen Aktors hingegen rutscht der Läufer relativ zum Aktor durch, sobald die Trägheitskraft des Läufers größer als die Reibungskraft zwischen Läufer und Aktor wird. Wenn mehrere Schritte durchgeführt werden, können auch makroskopische Bewegungen realisiert werden. Trägheitsantriebe stellen eine mechanisch einfache Möglichkeit dar, über größere Distanzen mit einer hohen Bewegungsauflösung zu positionieren. Trägheitsantriebe haben jedoch den Nachteil, dass es während der Gleitphase immer wieder zum Abbremsen, Stillstand oder sogar einer Rückwärtsbewegung der beweglichen Komponente kommt. Dieses Verhalten koppelt Vibrationen ein, was bei Präszisionspositionieraufgaben störend ist.

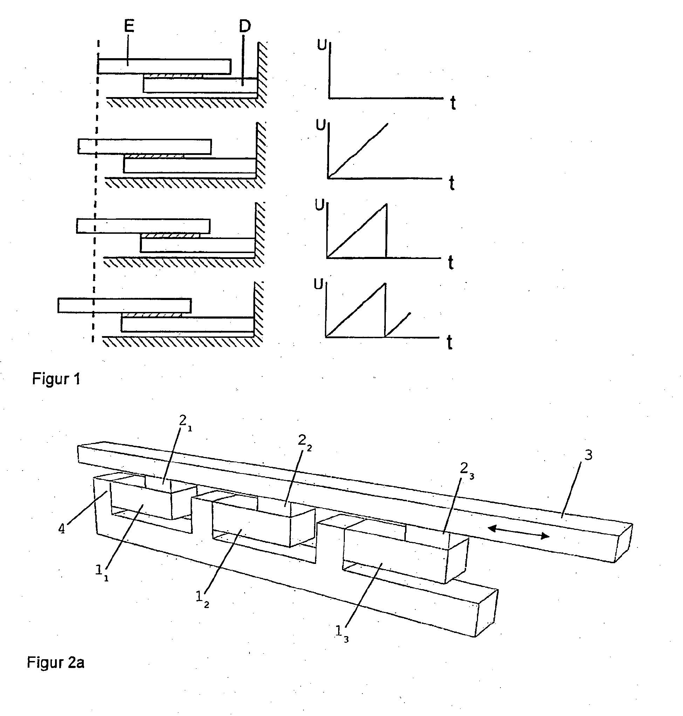

Die Darstellungen gemäß Fig. 1 lassen das Prinzip von Trägheitsantrieben erkennen, bei denen ein Aktor D auf einer Seite an einer nicht beweglichen Masse befestigt ist. Der Körper E steht mit dem Aktor D in Reibkontakt. Wenn der Aktor D durch das Anlegen einer sich langsam ändernden Spannung gering beschleunigt wird, so erfolgt ein Mitbewegen des Körpers E. Bei einer hohen Beschleunigung des Aktors D ist die Trägheitskraft des Körpers E größer als die Haftreibung, so dass es zu einer relativen Bewegung zwischen dem Körper E und dem Aktor D kommt.

Frühe Mehraktorantriebe waren einem solchen Trägheitsantrieb ähnlich und unterscheiden sich zunächst dadurch, dass zwei oder mehr Aktoren zum Einsatz kommen.

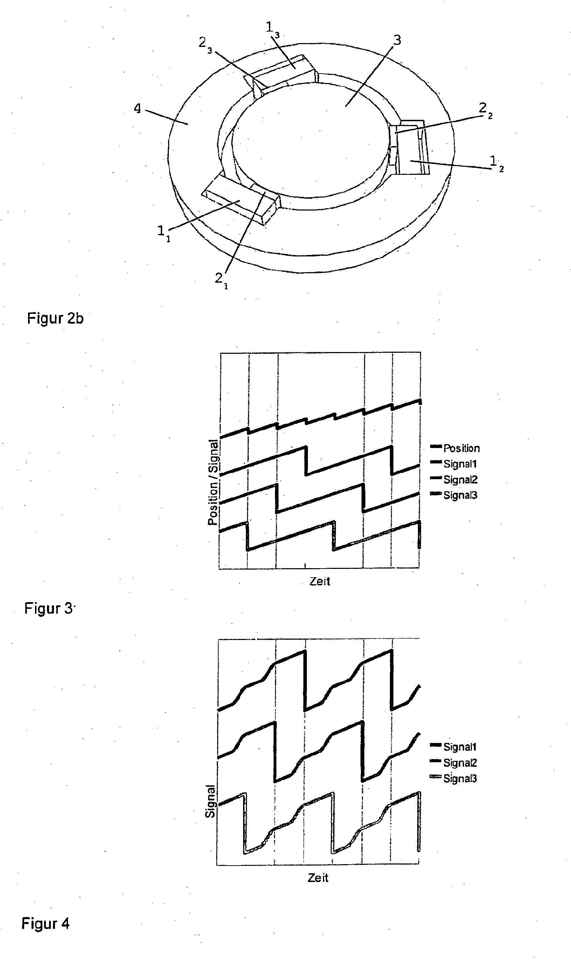

Fig. 2a zeigt einen prinzipiellen Aufbau eines bekannten linearen Mehraktorantriebs und Fig. 2b den prinzipiellen Aufbau eines bekannten rotatorischen Mehraktorantriebs.

Derartige Antriebe bestehen aus mindestens zwei bzw. beliebig vielen Aktoren 1₁, 12, ... 1ₙ, die über ein entsprechendes Ansteuersignal individuell oder in Gruppen zu einem begrenzten Hub angeregt werden können. Im Fall des Einsatzes von Piezoaktoren liegt der Hub typischerweise im Bereich von bis zu einigen µm. Die Aktoren weisen jeweils eine Reibstelle 2 auf, die mit einem Läufer 3 in Reibkontakt steht. Weiterhin sind die Aktoren fest mit einem Träger 4 verbunden. Die Reibstelle muss nicht notwendigerweise nur aus einer Platte bestehen, so wie dargestellt, sondern es können auch mechanisch komplexe Konstruktionen sein, die mehrere Funktionen übernehmen. So ist es z.B. möglich, dass dieses Bauteil genutzt wird um auch den Aktor mechanisch vorzuspannen, was z.B. für Piezokeramiken üblich ist.

Selbstverständlich kann der Aufbau von Mehraktorantrieben auch umgedreht werden, so dass der Läufer zur stationären Komponente wird und der Träger zur beweglichen Komponente. Es handelt sich dabei weiterhin um das gleiche Antriebsprinzip.

Die Fig. 3 zeigt einen üblichen Spannungsverlauf über der Zeit zur Ansteuerung von mehreren Aktoren, die zeitversetzt über einen Sägezahn, also ähnlich einem klassischen Trägheitsantrieb, angesteuert werden, und die daraus für den Läufer resultierende typische Bewegung.

Für konkrete Realisierungen sei auf die Veröffentlichung von Jean Marc Berguet: "Actionneurs "Stick and Slip" pour Micro-Manipulators"; EPFL, 1998, verwiesen. Dort wird für auf die Lehre nach EP 0750 356 A1 basierenden Mehraktorantrieben mit zwei, drei und vier Aktoren je Antrieb dargelegt, dass die für die Trägheitsantriebe typischen Geschwindigkeitsschwankungen und Vibrationen bei einem Mehraktorantrieb geringer ausfallen. Interessant an der Lösung ist, dass der Mehraktorantrieb aufgrund der hohen Beschleunigung der Piezoaktoren die Trägheitskräfte der beweglichen Komponente nutzt, so dass schon mit nur zwei Aktoren eine im Vergleich zu einfachen Trägheitsantrieben vibrationsarme Bewegung zu erzielen ist.

Es kommt auch bei solchen Antrieben bei einem Übergang eines Aktors in die Gleitphase prinzipbedingt zu einer unerwünschten Rückwärtsbewegung, einem Stopp oder einem Abbremsen des Läufers. In der Fig. 3 ist der Fall der leichten Rückwärtsbewegung visualisiert.

Eine Sonderform eines Mehraktorantriebs ist in der WO 93/19494 dargelegt. Dort werden die einzelnen Reibflächen nach und nach durch ein schnelles Verformen der Piezokeramiken zum Durchrutschen gebracht. Im Anschluss daran werden alle Reibflächen durch Anlegen einer identischen Spannungsrampe gemeinsam in eine Richtung ausgelenkt. Bei diesem gemeinsamen Auslenken rutscht der Läufer nicht relativ zu den Reibflächen durch, sondern wird mitbewegt. Nachteilig ist es jedoch, dass der Läufer aufgrund der dauernd wechselnden Beschleunigungen starken Vibrationen ausgesetzt ist.

Gemäß der DE 10 2009 013 849 A1 wird ein auf Piezoröhrchen basierender Antrieb mit mehreren Reibflächen zeitversetzt angesteuert, um eine Bewegung zu erzielen. Die Ansteuersignale sind so gewählt, dass mehrere Aktoren einen Läufer vorantreiben, um dann die Aktoren nach und nach zurückzuziehen, so dass der Läufer während des Zurückziehens durch die Mehrzahl der nicht bewegten Reibflächen in einer Position gehalten wird, d.h. stillsteht. Bei diesem Antrieb kommt es immer wieder zu Phasen der Bewegung und des Stillstands für den Läufer, so dass weiterhin Vibrationen auftreten und eine gleichmäßige Bewegung nicht möglich ist.

Eine weitere Klasse von Mehraktorantrieben sind sogenannte "Inchwormantriebe". Dabei handelt es sich um Antriebe, bei denen ein zu bewegender Läufer durch Aktoren im Wechsel geklemmt wird und der Abstand der Klemmen durch einen weiteren Aktor variiert wird. Durch ein geeignetes, zyklisches Ansteuern der Aktoren kann ein Läufer auch über große Distanzen bewegt werden. Diese Klasse von Aktoren verursachen prinzipiell störende Vibrationen, da hochfrequente, orthogonal zur Bewegungsrichtung wirkende Bewegungen durch die Klemmvorgänge eingekoppelt werden.

Bei allen bekannten Mehraktorantrieben kommt es zu unerwünschten Vibrationen und Abweichungen der Istposition des Läufers von der Sollposition. Dieser Effekt ist beim Übergang eines oder mehrerer Reibkontakte von der Haftphase in die Gleitphase besonders groß.

Weitere Verfahren sind aus WO 2010/113505 A1, WO 2007/144251 A1 und WO 2010/088937 A1 bekannt.

Aufgabe der vorliegenden Erfindung ist es, ein verbessertes Verfahren zur Ansteuerung einer Mehraktor-Antriebsvorrichtung zu schaffen, welches das Problem der störenden Vibrationen löst, nur geringe unerwünschte Geschwindigkeitsschwankungen nach sich zieht und eine hohe erzielbare Kraft ermöglicht.

Die Lösung der Aufgabe der Erfindung erfolgt gemäß der Lehre nach Patentanspruch 1, wobei die Unteransprüche mindestens zweckmäßige Ausgestaltungen und Weiterbildungen darstellen.

Es wird demnach zur Lösung der Aufgabe von einer Antriebsvorrichtung der eingangs genannten Art ausgegangen, welche aus mehreren Aktoren besteht, die jeweils die typischen Phasen von Haftreibung und Gleitreibung aufweisen.

Die Bewegungsrichtung des Antriebs wird vorgegeben durch die Wahl der Richtung in der sich die verschiedenen Aktoren während der Haftphase während des Großteil der Zykluszeit mehrheitlich bewegen.

Eine hohe Laufruhe wird dadurch erreicht, dass die elastischen Eigenschaften der Aktoren und der sonstigen Mechanik des Antriebs und die Wirkung der Elastizität bei der Ansteuerung berücksichtigt bzw. ausgenutzt werden. Vorstehendes erlaubt es, kombinierbare Ansteuerungsstrategien zu realisieren, die zu Antrieben mit sehr hoher Laufruhe führen.

Erfindungsgemäß kann eine mechanische Spannung zwischen den Reibflächen aufgebaut werden, indem die in der Haftreibung befindlichen Aktoren gezielt mit einer lokalen Relativbewegung zueinander bewegt werden, ohne dass die dazu gehörigen Reibflächen durchrutschen. Eine solche Relativbewegung wird vorrangig durch die Ansteuerung der Aktoren mit individuellen Steuersignalen erzeugt. Eine solche mechanische Spannung hat eine Kraftwirkung entlang der Bewegungsrichtung der wirkenden Aktoren bzw. der Bewegungsrichtung der Reibflächen. Eine solche Kraftwirkung hat stets eine Auswirkung auf die Position des Läufers.

Eine mechanische Spannung kann die beteiligten Aktoren und die Mechanik strecken oder stauchen. Arbeiten z.B. zwei Aktoren gegeneinander, so wird einer der Aktoren im Vergleich zum freien Zustand gestaucht, während der zweite Aktor gestreckt wird.

Wird von den verspannten Aktoren z.B. nur einer durch eine Ansteuerung zur Streckung gebracht, so wird ein zweiter nicht angesteuerter Aktor ebenfalls gestreckt, da die Reibflächen der beiden Aktoren, solange es nicht zum Durchrutschen einer der Reibflächen kommt, über den Läufer gekoppelt sind. Da beide Aktoren und die Mechanik eine gewisse Steifigkeit aufweisen, wird folglich der angesteuerte Aktor und die dazugehörige Mechanik nicht so weit ausgelenkt, wie es im freien Zustand der Fall wäre, während der zweite, nicht angesteuerte Aktor und die dazugehörige Mechanik gestreckt werden, was auch im freien Zustand nicht der Fall wäre. Die bewegliche Komponente des Antriebs wird dabei also um diese Distanz bewegt, ohne dass es zum Durchrutschen der Reibflächen kommt.

So ist es möglich, der beweglichen Komponenten des Antriebs, auch Läufer genannt, lokale Bewegungen aufzuprägen. Die mechanischen Spannungen zwischen den Reibflächen können vielfältig genutzt werden.
Es können z.B. lokale Abweichungen von einer Sollbewegung kompensiert werden und es können die Spannungen aufrecht erhalten werden, bis diese gegen störende Einflüsse wirken können.

Ändert sich die Bewegungsrichtung von einem oder mehreren Aktoren des Mehraktorantriebs, so hat das eine Kraftänderung zur Folge die auf die Position des Läufers wirkt. Sind jedoch mechanische Spannungen zwischen den Reibflächen aufgebaut, die dieser Kraftänderung entgegenwirken, reduziert sich der Einfluss dieser Kraftänderung. Eine ungewollte Kraftänderung führt zu Positions- oder Geschwindigkeitsfehlern des Läufer. Da die ungewollten Kraftänderungen auf den Läufer durch die erfindungsgemäße Ansteuerung reduziert oder sogar ganz aufgehoben werden, werden also auch die Positions- und Geschwindigkeitsfehler reduziert oder sogar ganz eliminiert.

Ein weiteres Beispiel: Geht ein Aktor oder eine Gruppe von Aktoren von der Haftphase in die Gleitphase über, so löst sich in der Regel ein Teil der mechanischen Spannung zwischen diesem oder diesen Aktoren zu den übrigen, in der Haftphase verbleibenden Aktoren, so dass es zu einer in erster Linie unerwünschten Kraftwirkung auf den Läufer kommt, was wiederum zu Positionier- oder Geschwindigkeitsfehlern des Läufers führt. Die durch die Ansteuersignale einstellbare mechanische Spannung wird genutzt, um eine ungewollte Bewegung des Läufers bei dem Übergang eines Aktors oder einer Gruppe von Aktoren von der Haftphase in die Gleitphase zu verringern oder idealerweise ganz auszugleichen. Daraus resultiert eine gleichmäßige, vibrationsarme und in der Regel auch geräuscharme Bewegung.

Besonders groß ist der Einfluss, wenn der Übergang in die Gleitphase nicht Iangsam erfolgt, sondern durch eine sprunghafte Beschleunigung der in die Gleitphase übergehenden Reibfläche, so wie es z.B. für Trägheitsantriebe üblich ist.

Darüber hinaus können die individuell einstellbaren Kurvenformen auch genutzt werden um ungewollte Bewegungsformen der einzelnen Aktoren, die zu ungewollten mechanischen Spannungen führen, auszugleichen.

Der voranstehende Ansatz, der in praktischen Versuchen in überraschender Weise zu einem erheblich besseren Laufverhalten führt, kann mit mehreren Ansteuerstrategien verfolgt werden.

Nachstehend werden im Rahmen von Ausführungsbeispielen und unter Zuhilfenahme von Figuren einige beispielhafte Ansteuerstrategien erläutert. Werden nur zwei Aktoren eingesetzt, so sind hohe Beschleunigungen notwendig um von der Haftphase des jeweiligen Aktors in die Gleitphase übergehen zu können.

Werden mehr als zwei Aktoren eingesetzt, so sind hohe Beschleunigungen nicht zwingend erforderlich. In einigen Ausführungsformen der Ansteuerungsvarianten sind hohe Beschleunigungen sogar zu vermeiden.

Eine besondere Ausführungsform der Ansteuerung erlaubt, durch eine auf alle Ansteuerungssignale der Aktoren, gleichermaßen aufaddierte Bewegung, den Läufer gezielt vor- oder zurück zubewegen, ohne dass sich eine weitere mechanische Spannung zwischen den Reibflächen aufbaut. Das kann genutzt werden, um verbleibende Vibrationen, Geschwindigkeitsschwankungen und Positionierfehler auszugleichen.

Soll hingegen eine weitere mechanische Spannung aufgebaut werden, so bietet es sich an, ein solche Bewegung lediglich an Untergruppen der Aktoren des Antriebs anzulegen.

Wenn ein Aktor oder eine Gruppe von Aktoren eine Richtungsumkehr vollzieht oder in die Gleitphase übergehen, kommt es in der Regel zu einer Kraftschwankung, die auf den Läufer wirkt und diesen so von der idealen oder gewünschten Geschwindigkeit oder Position abbringt. Zur Lösung dieses Problems können wie beschrieben durch eine erfindungsgemäße Ansteuerung der einzelnen Aktoren zwischen den Reibflächen mechanische Spannungen aufgebaut werden. Geht ein Aktor oder eine Gruppe von Aktoren von der Haftphase in die Gleitphase über, so löst sich ein Teil der mechanischen Spannung zwischen diesem oder diesen Aktoren zu den übrigen, in der Haftphase verbleibenden Aktoren. Das bewirkt eine Kraftwirkung auf den Läufer, die der ungewollten Kraftwirkung aufgrund des Überganges von der Haft- in die Gleitphase entgegenwirkt, so dass der Läufer deutlich verbessert die Sollgeschwindigkeit bzw. Sollposition hält. Dies führt zu einer gleichmäßigen Bewegung mit geringen Vibrationen mit einer geringen Positionsabweichung zu einer Sollposition.

Eine solche Kompensation kann durch die sprunghafte Bewegung einzelner oder aller in der Haftphase befindlicher Aktoren erfolgen.
Statt durch sprunghafte Bewegungen kann vorteilhaft über langsamere unterschiedliche Geschwindigkeiten vor dem Übergang in die Gleitphase eines Aktors der störende Effekt dieses Übergangs kompensiert werden. Fig. 4 zeigt beispielhaft derartige stark vereinfachte Signale zur Ansteuerung.
Zieht z.B. der in die Gleitphase übergehende Aktor den Läufer etwas zurück, können die übrigen Aktoren in oder vor dieser Phase durch die Ansteuerung etwas zügiger vorangetrieben werden, so dass die Kraftwirkung kompensiert wird und die Geschwindigkeit des Läufers konstant bleibt.

Vorteil einer etwas langsameren Änderung ist es, die Ausgleichsbewegung kontrollierter führen zu können, als es bei einem stoßweisen Ausgleich der Fall ist. Es ergibt sich insgesamt eine gleichmäßige, vibrationsarme Bewegung.

Grundsätzlich ist eine entsprechende Ausgleichsbewegung jederzeit durchführbar. Z.B. permanent, eher vor einem Übergang von der Haftphase in die Gleitphase aber auch nach einem Übergang, da die sich aufbauende mechanische Spannung beliebig lange aufrecht erhalten lässt. Das,Gleiche gilt selbstverständlich für eine Richtungsumkehr einzelner oder mehrerer Aktoren.

Um ausreichende Freiheiten zur Einstellung geeigneter mechanischer Spannungen zu erreichen, wie Aktoren am Antrieb beteiligt sind, bietet es sich an, individuelle Steuersignale an die einzelnen Aktoren anzulegen, die den Aktoren unterschiedliche Geschwindigkeiten oder sogar Beschleunigungen aufprägen.

Dies ermöglicht es, z.B. immer dann, wenn ein Aktor (oder eine Gruppe von Aktoren) in eine Richtungsumkehr vollzieht oder in die Gleitphase übergeht, eine notwendige mechanische Spannung zwischen den Reibflächen der Aktoren aufgebaut zu haben, um so die störenden Kräfte auf den Läufer auszugleichen. Z.B. durch den Übergang des Aktors in die Gleitphase löst sich ein Teil der mechanische Spannung und wirkt so mit einer Kraft auf den Läufer, die der Kraft aufgrund der Beschleunigung der Reibfläche entgegenwirkt und im Idealfall selbige vollständig kompensiert.

Gleiches gilt auch für eine Richtungsumkehr einzelner oder aller Aktoren, da wie bereits beschrieben auch eine solche Richtungsänderung zu ungewollten Kraftänderungen und damit Positionier- und Geschwindigkeitsfehlern führen kann.

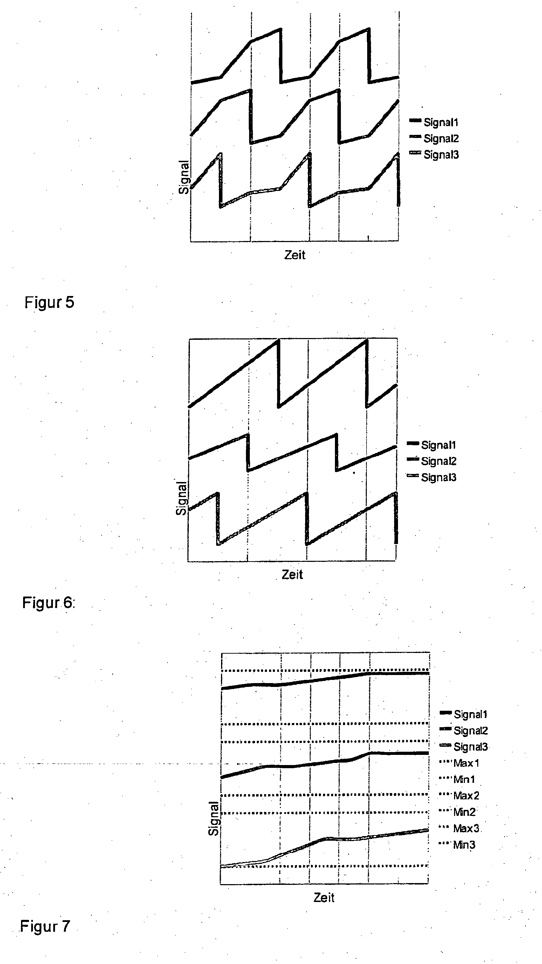

Vorteilhaft kann jeder Aktor zu jedem Zeitpunkt seine Geschwindigkeit oder Beschleunigung ändern. Es können, müssen jedoch nicht alle Aktoren eines Antriebs an diesen Ausgleichsbewegungen teilnehmen. Fig. 5 zeigt beispielhaft derartige Signale zur Ansteuerung des Antriebs für den Fall von drei Aktoren. In diesem Beispiel werden in eine Richtung durch die Steuersignale hohe Beschleunigungen aufgebracht, so wie es für Trägheitsantriebe üblich ist, so dass jeweils verhältnismäßig starke Beschleunigungen auf den Läufer wirken die es zu kompensieren gilt.Selbstverständlich kann auf die hohe Beschleunigung verzichtet werden, was den Vorteil hat, dass es zu weniger großen Vibrationen kommt. Die erfindungsgemäße Ansteuerung kann in beiden Fällen herangezogen werden.

Bei einer weiteren Ausführungsform ist es möglich, den unterschiedlichen Aktoren individuelle Geschwindigkeiten in der Haftphase aufzuprägen. Dies hat auch zur Folge, dass sich gezielt mechanisch Spannungen zwischen den verschiedenen Aktoren auf- oder abbauen lassen. Auch hier können, müssen jedoch nicht alle Aktoren eines Antriebs an diesen Ausgleichsbewegungen teilnehmen. Beispielhafte Steuersignale für einen Mehraktorantrieb mit unterschiedlichen Geschwindigkeiten oder Steueramplituden je Aktor zeigt die Fig. 6. Auch in Fig. 6 wurde der Einfachheit halber eine Variante dargestellt, bei der hohe Beschleunigungen, so wie für Trägheitsantriebe üblich, aufgebracht werden. Es ist auch möglich auf die hohen Beschleunigungen zu verzichten.
Die an den Aktor angelegten Signale und die damit angeregten Bewegungen der Aktoren müssen nicht, wie in der Fig. 6 dargestellt, linear verlaufen.

Fig. 7 zeigt ein Teilsegment, bei dem die Verläufe nicht linear sind, so dass auch in der Phase kleinere Bewegungsabweichungen von einer Sollbewegung durch mechanische Spannungen ausgeglichen werden, die wie beschrieben zu lokalen Bewegungen des Läufers führen.
Um geeignete mechanische Spannungen zum Ausgleich der Kraftwirkung einzustellen, kann es sinnvoll sein die unterschiedlichen Verhalten der eingesetzten Aktoren zu berücksichtigen.

So können verschiedene parasitäre Einflüsse auf ein gleichmäßiges Laufverhalten des Läufers ausgeglichen werden. Beispielhafte parasitäre Einflüsse sind ein unterschiedliches Verhalten der Aktoren (z.B. unterschiedliche Sättigungen, unterschiedliche Hübe bzw. Kennlinien), Drift in den Aktoren, unterschiedlichen Einbaubedingungen und unterschiedliche Aktoren.

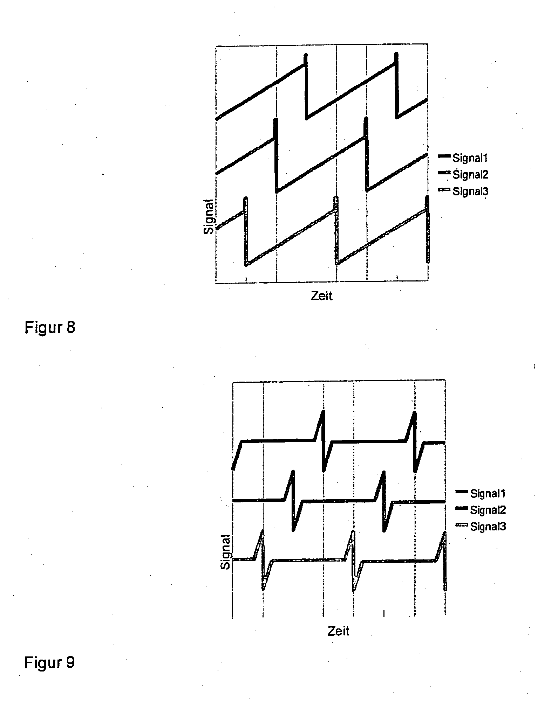

Eine Sonderform zum Aufbau einer geeigneten mechanischen Spannung liegt dann vor, wenn der jeweilige Aktor unmittelbar vor einem Übergang von der Haftphase in die Gleitphase gegenüber den anderen Reibflächen in zeitlichen Nähe mit einer anderen Geschwindigkeit bewegt wird. Die Höhe und die Dauer der Ansteuerungssignale sind vorzugsweise für jeden Aktor individuell einstellbar. Beispielhafte Signalformen hierfür sind in Fig. 8 gezeigt. Dieses lässt sich sowohl für einzelne Aktoren als auch für Gruppen von Aktoren die zusammen bewegt werden, realisieren.

Leistungsfähige Mikro- und Nanopositioniersysteme arbeiten in der Regel mit einer Positionsüberwachung, z.B. durch Interferometer oder mittels hochauflösender, optischer Encoder. Die erhaltenen Messdaten können genutzt werden, um Vibrationen und Geschwindigkeitsvariationen zu ermitteln und individuelle Kurvenformen zu erarbeiten, mit denen die Aktoren so angesteuert werden, dass eine gleichmäßige Bewegung erzielbar ist.

Dies kann beispielsweise durch eine Kalibrierung erfolgen, bei dem ideale Kurvenverläufe für die verschiedenen Aktoren ermittelt werden, die dann zum Bewegen des Läufers in geeigneter Frequenz und Form an die Aktoren anlegbar sind. Die durch diese Kalibrierung ermittelten Kurvenverläufe können dann idealerweise zyklisch an die Aktoren angelegt werden und führen zu einer vibrationsarmen Bewegung.

Eine weitere Möglichkeit ist es, einen Regelkreis zu nutzen, der es erlaubt, die Kurvenformen permanent anzupassen, um so auch in der Lage zu sein, auf sich ändernde Randbedingungen, wie z.B. Temperaturschwankungen, externe Kräfte, Alterung der Aktoren und Weiteres reagieren zu können, letztendlich mit dem Ziel, eine gleichmäßige und kräftige Bewegung zu erzielen.
In einem weiteren Regelkreis kann eine idealerweise auf alle Aktoren gleichermaßen aufaddierte Ausgleichsbewegung angelegt werden, die einem Positionierfehler lokal entgegenwirkt.

In einem weiteren Regelkreis kann die Zyklusdauer, mit der die periodischen Signale durchlaufen werden als Regelparameter verwendet werden. Besonders vorteilhaft ist es, wenn diese drei Parameter, Kurvenformen, aufaddierte Bewegung und Zyluszeit, in Kombination miteinander verwendet werden.

Ein weiterer Ansatz um geeignete mechanische Spannungen zwischen den Reibkörpern aufzubauen um damit eine ungewollte Bewegung des Läufers beim Übergang eines Aktors von der Haftphase in die Gleitphase zu verhindern, ist es, mit den Aktoren zyklisch Schritte mit Pausen durchzuführen. Bei jedem einzelnen Schritt baut sich zwischen der Reibfläche des Schritt ausführenden Aktors und der Reibflächen der in Ruhe befindlichen Aktoren eine mechanische Spannung auf. Sobald ein nächster Aktor einen Schritt durchführt, hilft die aufgebaute mechanische Spannung, dass dieser Aktor einfacher (weniger Kraft) von der Haftphase in die Gleitphase übergehen kann, so dass die Kraftwirkung auf den Läufer aufgrund des Überganges von der Haftphase auf die Gleitphase geringer ist. Somit kommt es zu geringeren Geschwindigkeitsschwankungen und im idealen Fall zu keiner Geschwindigkeitsschwankung.

Besonders vorteilhaft ist es, wenn die Schritte der einzelnen Aktoren möglichst geringe Vibrationen ausüben. Das liegt vor, wenn die Pulsdauer der Einzelimpulse der Ansteuersignale unterhalb der Periodendauer der Eigenschwingungen des Positionierers liegt.
Das Prinzip kann angewendet werden, unabhängig davon, ob lediglich zwei oder mehr Aktoren je Antrieb zum Einsatz kommen und unabhängig davon ob einzelne Aktoren Schritte durchführen oder Gruppen von Aktoren.

Um ein sinnvolles Laufverhalten zu erzielen, können die Schrittamplituden und die Schrittdauer der einzelnen Aktoren, aber auch die Schrittsymmetrie individuell einstellbar sein. Die Kombination von individuell einstellbaren Kurvenformen bei Mehraktorantrieben mit dem Einsatz der oben beschriebenen sehr kurzen Schrittdauer erlaubt Antriebe mit sehr geringen Schwingungen und sehr kurzen Einschwingzeiten nach jedem Schritt. Fig. 9 zeigt diesbezüglich beispielhafte typische Ansteuersignale.

Es ist möglich alle genannten erfindungsgemäßen Ansätze zu kombinieren.

Ergänzend zu dem bisher beschriebenen Zyklusbetrieb, ist es möglich, den Läufer des Mehraktorantrieb auch durch das Ansteuern der einzelnen Aktoren durch quasi statische Signale in der Größenordnung der Hübe der einzelnen Aktoren mit der Bewegungsauflösung der Aktoren zu bewegen. Das ermöglicht z.B. bei Piezokeramiken Bewegungsauflösungen deutlich im Sub-Nanometerbereich.
Die Scanbewegung muss also nicht Teil des Schrittbewegung sein, sondern kann auch losgelöst von den Schritten durchgeführt werden, z.B. wenn lokal mit einer hohen Bewegungsauflösung bewegt werden muss.

Es können alle oder Teile der erwähnten beispielhaften Ansteuerstrategien kombiniert werden, um eine möglichst gleichmäßige, vibrationsarme Bewegung des Antriebs zu erzielen. Die Erfindung wird durch die Ansprüche definiert.

## Patentansprüche

1. Verfahren zur Ansteuerung einer Mehraktor-Antriebsvorrichtung mit einem stationären und einem beweglichen Teil, wobei die Relativbewegung zwischen dem stationären und dem beweglichen Teil über Aktoren mit begrenzten Hüben erzeugt wird, die entweder direkt oder über eine kraftübertragende Mechanik im permanenten Reibkontakt mit dem beweglichen Teil stehen, wobei hierfür zeitlich versetzte Ansteuersignale genutzt werden, die ein Abwechseln zwischen einer Gleit- und einer Haftphase für jeden Aktor erzwingen, **dadurch gekennzeichnet, dass**
Geschwindigkeitsschwankungen und Vibrationen der Vorrichtung durch Ausnutzung der Elastizität in den Komponenten des Antriebs verringert oder verhindert werden, indem zwischen den Reibstellen der Aktoren, durch auf die jeweilige Situation angepasste Ansteuerkurven, geeignete mechanische Spannungen aufgebaut werden, die eine ungewollte Variation der Kraft der Aktoren auf den beweglichen Teils, vorrangig bei einem Übergang eines Aktors, oder einer Gruppe von Aktoren, von der Haftphase in die Gleitphase, oder bei der Richtungsumkehr einzelner oder aller Aktoren verhindern.

2. Verfahren nach Anspruch 1,
**dadurch gekennzeichnet, dass**
aufgrund der angelegten Ansteuersignale Aktorbewegungen erzwungen werden, welche mechanischen Spannungen zwischen den Reibflächen aufbauen, die eine Abweichungen der beweglichen Komponente von einer Sollbewegung innerhalb eines Zyklus reduzieren und idealerweise ganz ausgleichen.

3. Verfahren nach einem der vorangehenden Ansprüche,
**dadurch gekennzeichnet, dass**
den Aktoren gezielt Signalverläufe von Steuersignalen zur Ansteuerung zugefügt werden, die die Aktoren zu Bewegungen anregen, die eine ungewollte, mechanische Spannung zwischen den Reibstellen der Aktoren verhindern, die dann entsteht, wenn sich die verschiedenen im Einsatz befindlichen Aktoren unterschiedlich verhalten.

4. Verfahren nach einem der vorhergehenden Ansprüche,
**dadurch gekennzeichnet, dass**
eine Positionssensorik die Position der beweglichen Komponente feststellt und wahlweise über die Kurvenformen, die die geeigneten mechanischen Spannungen zwischen den Reitkörpern aufbauen oder die Zyklusdauer oder eine Kombination beider Parameter die Position der beweglichen Komponente regelt.

5. Verfahren nach einem der vorhergehenden Ansprüche,
**dadurch gekennzeichnet, dass**
eine verbleibende Abweichung der resultierenden Bewegung des beweglichen Teils zu einer Sollbewegung innerhalb eines Ansteuerzyklus durch eine auf die Aktoren aufaddierte Ausgleichsbewegung kompensiert wird, wobei diese Ausgleichsbewegung vorzugsweise auf alle beteiligten Aktoren gleichermaßen aufaddiert wird, so dass keine weitere ungewollte mechanische Spannung zwischen den Reibflächen aufgebaut wird.

6. Verfahren nach einem der vorhergehenden Ansprüche,
**dadurch gekennzeichnet, dass**
durch die Ansteuersignale mit den einzelnen Aktoren zyklisch kurze Schritte mit Pausen realisiert werden, wobei ein Schritt immer dann durchgeführt wird, wenn der oder die anderen Aktoren stillstehen, mit der Folge, dass sich mit jedem Schritt mechanische Spannungen zwischen den Reibflächen aufbauen, die der ungewollten Kraftwirkung auf den beweglichen Teil bei dem Übergang eines Aktors oder einer Gruppe von Aktoren von der Haftphase in die Gleitphase entgegenwirken.

7. Verfahren nach Anspruch 6,
**dadurch gekennzeichnet, dass**
die Ansteuersignale mit Steuer-Schrittimpulsen arbeiten, deren Pulsdauer für die einzelnen Aktoren unterhalb der Eigenschwingung des Antriebs liegt, so dass mit jedem Aktor kleine Schritte mit sehr geringer Vibration durchführbar sind.

## Claims

1. A method for controlling a multi-actuator drive device having a stationary and a movable part, wherein the relative movement between the stationary and the movable part is generated via actuators having limited strokes, which are in permanent frictional contact with the movable part either directly or via a force-transmitting mechanism, wherein control signals with a timing offset are used therefor, which force alternation between a slip phase and a stick phase for each actuator, **characterised in that**
speed variations and vibrations of the device are reduced or prevented by utilising the elasticity in the drive components, by building up, between the points of friction of the actuators by means of control waveforms adapted to the respective situation, suitable mechanical tensions which prevent any undesired variation in the force exerted by the actuators on the movable part, above all when an actuator or group of actuators transition from the stick phase to the slip phase, or when one or all actuators reverse direction.

2. The method according to claim 1,
**characterised in that**
due to the applied control signals, actuator movements are forced which build up mechanical tensions between the friction surfaces, said tensions reducing and ideally equalising entirely any deviations of the movable components from a desired movement within a cycle.

3. The method according to any one of the preceding claims,
**characterised in that**
the actuators are systematically fed with signal waveforms of control signals, which induce the actuators to perform movements preventing any undesired, mechanical tension between the points of friction of the actuators, which arises when the different actuators being used behave differently.

4. The method according to any one of the preceding claims,
**characterised in that**
a position sensor system detects the position of the movable components and selectively controls the position of the movable components via the waveforms, which build up the appropriate mechanical tensions between the sliders, or via the cycle duration, or via a combination of both parameters.

5. The method according to any one of the preceding claims,
**characterised in that**
any remaining deviation of the resultant movement of the movable part from a desired movement within a control cycle is compensated by a compensatory movement added to the actuators, said compensatory movement preferably being added equally to all the actuators involved, so that no further undesirable mechanical tension is built up between the friction surfaces.

6. The method according to any one of the preceding claims,
**characterised in that**
cyclically short steps with intervals are realised with the individual actuators by means of the control signals, a step being performed whenever the actuator or the other actuators are stationary, with the consequence that, at each step, mechanical tensions build up between the friction surfaces, which counteract the undesired exertion of force on the movable part when an actuator or a group of actuators transitions from the stick phase to the slip phase.

7. The method according to claim 6,
**characterised in that**
the control signals operate with control step pulses, the duration of which for the individual actuators is below the natural oscillation of the drive, such that small steps can be performed with each actuator with very low vibration.

## Revendications

1. Procédé de commande d'un dispositif d'entraînement à plusieurs actionneurs comprenant une partie stationnaire et une partie mobile, le mouvement relatif entre la partie stationnaire et la partie mobile étant généré par l'intermédiaire d'actionneurs à courses limitées qui sont en contact de frottement permanent avec la partie mobile soit directement soit par l'intermédiaire d'un mécanisme de transmission de force, des signaux de commande décalés dans le temps qui forcent une alternance entre une phase de glissement et une phase d'adhérence étant utilisés à cet effet, **caractérisé en ce que** les fluctuations de vitesse et les vibrations du dispositif sont réduites ou empêchées par l'exploitation de l'élasticité dans les composants de l'entraînement, en engendrant progressivement entre les points de frottement des actionneurs par des courbes de commande adaptées à la situation concernée des tensions mécaniques appropriées qui empêchent une variation intempestive de la force des actionneurs sur la partie mobile, prioritairement lors d'un passage d'un actionneur, ou d'un groupe d'actionneurs, de la phase d'adhérence à la phase de glissement, ou lors d'une inversion de sens d'actionneurs individuels ou de tous les actionneurs.

2. Procédé selon la revendication 1, **caractérisé en ce que**, des mouvements d'actionneur qui engendrent progressivement entre les surfaces de frottement des tensions mécaniques qui réduisent ou idéalement compensent totalement un écart des composants mobiles par rapport à un mouvement de consigne dans un cycle sont forcés en raison des signaux de commande appliqués.

3. Procédé selon l'une quelconque des revendications précédentes, **caractérisé en ce que** des allures de signaux de commande sont imposées de manière ciblée aux actionneurs pour les exciter à effectuer des mouvements qui empêchent une tension mécanique intempestive entre les points de frottement des actionneurs, laquelle survient quand les différents actionneurs en usage se comportent différemment.

4. Procédé selon l'une quelconque des revendications précédentes, **caractérisé en ce qu'**un ensemble de capteurs détermine la position des composants mobiles et règle la position des composants mobiles sélectivement par l'intermédiaire des formes de courbes qui engendrent les tensions mécaniques appropriées entre les corps de frottement ou de la durée du cycle ou d'une combinaison des deux paramètres.

5. Procédé selon l'une quelconque des revendications précédentes, **caractérisé en ce qu'**un écart rémanent du mouvement résultant de la partie mobile par rapport à un mouvement de consigne dans un cycle de commande est compensé par un mouvement de compensation ajouté aux actionneurs, ce mouvement de compensation étant ajouté de préférence uniformément à tous les actionneurs participants de sorte qu'aucune autre tension mécanique intempestive n'est engendrée entre les surfaces de frottement.

6. Procédé selon l'une quelconque des revendications précédentes, **caractérisé en ce qu'**en raison des signaux de commande, de petits pas avec des pauses sont réalisés cycliquement avec les actionneurs individuels, un pas étant toujours accompli quand l'actionneur ou les autres actionneurs sont immobiles avec pour résultat que des tensions mécaniques qui s'opposent à l'exercice d'une force indésirable sur la partie mobile lors du passage d'un actionneur ou d'un groupe d'actionneurs de la phase d'adhérence à la phase de glissement sont engendrées entre les surfaces de frottement avec chaque pas.

7. Procédé selon la revendication 6, **caractérisé en ce que** les signaux de commande fonctionnent avec des impulsions de pas de commande dont la durée d'impulsion pour les actionneurs individuels se situe en dessous de l'oscillation propre de l'entraînement de sorte que de petits pas peuvent être effectués avec des vibrations très limitées avec chaque actionneur.
